# EUROPEAN PATENT SPECIFICATION

(11) **EP 1 914 436 B1**
(45) Date of publication and mention of the grant of the patent: **09.03.2016**
(21) Application number: 07254072.7
(22) Date of filing: 15.10.2007
(51) Int. Cl.: F16D 59/02, F16D 67/02, F16D 49/00

(54) **Braking mechanism**
Bremsmechanismus
Mécanisme de freinage

(30) Priority: 16.10.2006 CN 200610096647
(43) Date of publication of application: 23.04.2008
(73) Proprietor: Suzhou Cleva Electric Appliance Co., Ltd., Jiangsu Province (CN)
(72) Inventor: Sang, Shuhua, 215011 Suzhou (CN); Wei, Juan, 215011 Suzhou (CN)
(74) Representative: Stuttard, Garry Philip

(56) References cited:
- ES-A1- 2 126 436
- GB-A- 2 320 746
- GB-A- 2 324 127
- US-A- 3 897 678

## Description

The present invention relates to a garden tool comprising a braking mechanism.

Due to its rotational inertia, the working shaft of a garden tool typically cannot be stopped instantly after the supply power is shut off. However for some garden machines with special requirements (eg a lawn mower), it is imperative that the cutting tool mounted on the working shaft is stopped instantly for safety reasons. Some conventional garden tools adopt an electronic braking mechanism to achieve instant braking but the motor is easily damaged once the electronic braking mechanism is invalidated. Other garden tools adopt a mechanical braking mechanism which is complex in structure with a relatively large number of components which are difficult to manufacture thereby resulting in high manufacturing costs.

Document ES 2 126 436 A1 discloses a rotary tool comprising a braking mechanism.

The present invention seeks to improve garden tools by providing a braking mechanism for garden tools which is simple in structure, low in cost and reliable in braking function.

Thus viewed from a first aspect the present invention provides a garden tool according to the preamble of claim 1.

The present invention exploits the difference in rotational inertia between the outer wheel and the inner wheel of the working wheel assembly when the motor stops to cause the inner wheel to rotate relative to the outer wheel and generate circumferential friction between the first brake member and the second brake member via the resilient spring member. This achieves an efficient braking function. The present invention is simple in structure and the number of required components is relatively small so that manufacturing costs are low.

The inner wheel and outer wheel are typically substantially coaxial. The inner wheel and outer wheel are typically substantially coplanar. The inner wheel is typically seated or nested (eg concentrically nested) within the outer wheel.

The first brake member and second brake member are typically substantially coaxial. The first brake member and second brake member are typically substantially coplanar. The second brake member is typically seated or nested (eg concentrically nested) within the first brake member.

The receiving slot may be substantially arcuate. The arcuate receiving slot may be substantailly circumferential.

In the working non-braking state, the outer wheel may drive the inner wheel and the rotary working shaft rotationally to an extent sufficient to overcome the tendency of the resilient spring member to bias the first brake member into contact with the second brake member.

Preferably the outer wheel has a substantially inwardly radial projecting block and the inner wheel has a substantially outwardly radial projection, wherein the radial projecting block abuts the radial projection in the working non-braking state.

Preferably the outer wheel has a plurality of substantially inwardly radial projecting blocks and the inner wheel has a plurality of substantially outwardly radial projections, wherein the plurality of radial projecting blocks and plurality of radial projections are interleaved and at least one of the plurality of radial projecting blocks abuts one of the plurality of radial projections in the working non-braking state.

Preferably the outer wheel has a plurality of substantially inwardly radial projecting blocks and the inner wheel has a plurality of substantially outwardly radial projections, wherein the plurality of radial projecting blocks and plurality of radial projections are interleaved and each of the plurality of radial projecting blocks abuts an adjacent one of the plurality of radial projections in the working non-braking state.

Preferably the inner wheel defines an open-ended receiving slot to receive the resilient spring member.

Particularly preferably the first brake member includes:
a substantially arcuate main body terminating in an inverted portion which is positioned at the open end of the receiving slot.

Particularly preferably one of the plurality of substantially inwardly radial projecting blocks abuts the inverted portion in the working non-braking state so as to compress the resilient spring member against the tendency to bias the first brake member into contact with the second brake member.

Particularly preferably the one of the plurality of substantially inwardly radial projecting blocks releases the inverted portion in the non-working braking state so as to permit the resilient spring member to bias the first brake member into contact with the second brake member.

Preferably the inner wheel includes a positioning post and a distal end of the first brake member is mounted on the positioning post.

In a preferred embodiment, the braking mechanism further comprises:
an annular cover plate defining a substantially central hole which covers the first brake member, the inner wheel and the outer wheel, wherein the second brake member passes through the substantially central hole of the annular cover plate.

Preferably the resilient spring member has a tendency to bias the first brake member radially into contact with the second brake member.

Preferably the inner wheel is substantially concentrically nested within the outer wheel.

Preferably the second brake member is substantially concentrically seated or nested within the first brake member.

Viewed from a further aspect the present invention provides garden tool according to claim 14.

Preferably the outer wheel has a substantially inwardly radial projecting block and the inner wheel has a substantially outwardly radial projection, wherein the radial projecting block abuts the radial projection in the working non-braking state.

Preferably the outer wheel has a plurality of substantially inwardly radial projecting blocks and the inner wheel has a plurality of substantially outwardly radial projections, wherein the plurality of radial projecting blocks and plurality of radial projections are interleaved and at least one of the plurality of radial projecting blocks abuts one of the plurality of radial projections in the working non-braking state.

Preferably the outer wheel has a plurality of substantially inwardly radial projecting blocks and the inner wheel has a plurality of substantially outwardly radial projections, wherein the plurality of radial projecting blocks and plurality of radial projections are interleaved and each of the plurality of radial projecting blocks abuts an adjacent one of the plurality of radial projections in the working non-braking state.

Preferably the outer wheel defines an open-ended receiving slot to receive the resilient spring member.

Particularly preferably the first brake member includes:
a substantially arcuate main body terminating in an inverted portion which is positioned at the open end of the receiving slot.

Particularly preferably one of the plurality of substantially inwardly radial projecting blocks abuts the inverted portion in the working non-braking state so as to compress the resilient spring member against the tendency to bias the first brake member into contact with the second brake member.

Preferably the outer wheel includes a positioning post and a distal end of the first brake member is mounted on the positioning post.

In a preferred embodiment, the braking mechanism further comprises:
an annular cover plate defining a substantially central hole which covers the first brake member, the inner wheel and the outer wheel, wherein the second brake member passes through the substantially central hole of the annular cover plate.

Preferably the resilient spring member has a tendency to bias the first brake member radially into contact with the second brake member.

Preferably the inner wheel is substantially concentrically nested within the outer wheel.

Preferably the second brake member is substantially concentrically seated or nested within the first brake member.

The present invention will now be described in a non-limitative sense with reference to the accompanying Figures in which:
Figure 1 is a partial cross-sectional view of a first embodiment of the present invention;
Figure 2 is an exploded perspective view of the braking mechanism of Figure 1;
Figure 3 is a top view of the assembled braking mechanism of Figure 2;
Figure 4 is a partial cross-sectional view of a second embodiment of the present invention;
Figure 5 is an exploded perspective view of the braking mechanism of Figure 4; and
Figure 6 is a top view of the assembled braking mechanism of Figure 5.

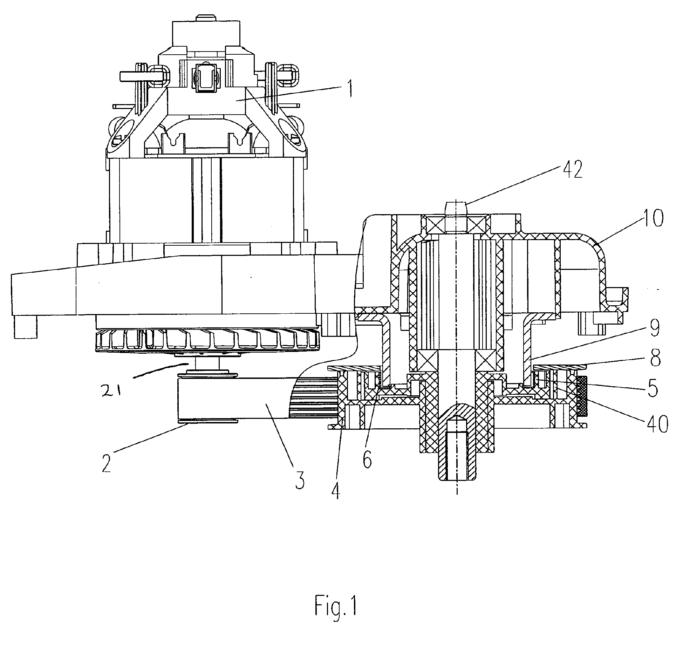

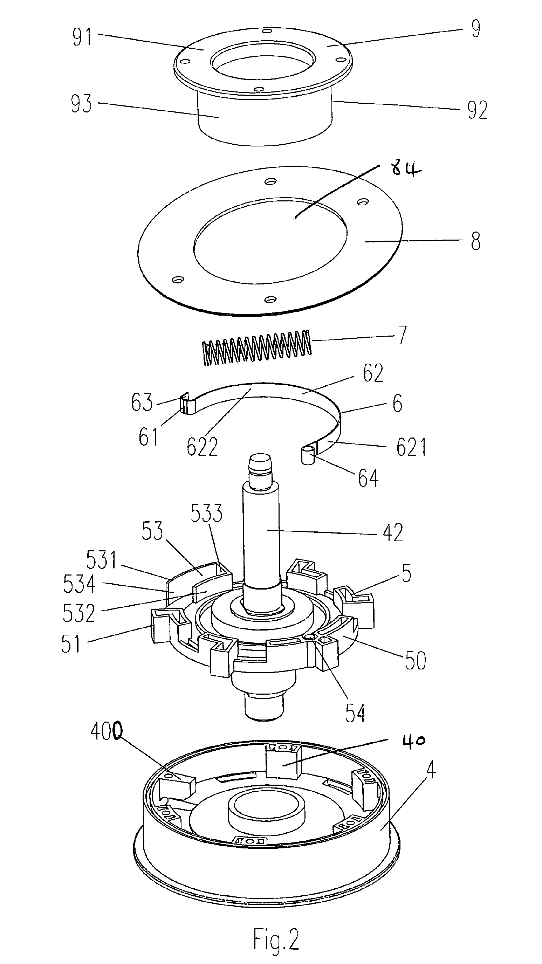

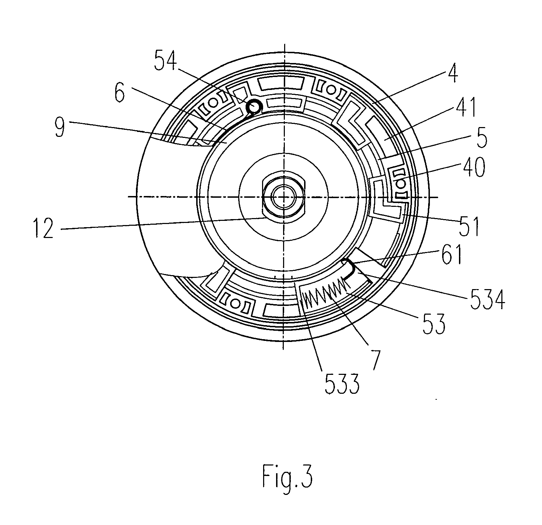

A braking mechanism for a garden tool according to a first embodiment of the invention is shown in Figures 1 to 3 and includes a working wheel assembly rotatable about a working shaft 42 for mounting a cutting tool (not shown) and twin brake members 6, 9. The garden tool includes a motor 1, a driver 2 fixed to a first end of a motor shaft 21 and a transmission strap 3.

The working wheel assembly comprises an inner wheel 5 fixed to the working shaft 42 and an outer wheel 4 enclosing the inner wheel 5. The transmission strap 3 is wound around an outer face of the driver 2 and of the outer circumferential wall of the outer wheel 4. An inner face of the outer circumferential wall of the outer wheel 4 forms a plurality of circumferentially spaced apart, radial projecting blocks 40 and a radial stop block 400 which extend radially inwardly. A plurality of circumferentially spaced apart, radial projections 51 corresponding to the radial projecting blocks 40 extend radially outwardly from an outer face of an outer circumferential wall 50 of the inner wheel 5. When the inner wheel 5 and the outer wheel 4 are assembled together and the working wheel assembly is in a normal working state, the transmission strap 3 is driven to rotate the outer wheel 4 and the radial projecting blocks 40 of the outer wheel 4 push the corresponding radial projections 51 of the inner wheel 5 so that the inner wheel 5 is driven to rotate with the working shaft 42.

The braking mechanism further comprises a first brake member 6, a second brake member 9 and a resilient spring member 7. The inner wheel 5 defines a receiving slot 53 for receiving the resilient spring member 9. The receiving slot 53 is defined by an outer part-circumferential wall 531, an inner wall 532 which is substantially parallel to the outer part-circumferential wall 531 and a substantially radial end wall 533 connecting the outer part-circumferential wall 531 and the inner wall 532. The receiving slot 53 has an open end 534 opposite to the end wall 533. Exterior faces of the outer part-circumferential wall 531 and of the radial projections 51 are located on a common circumference having an identical radius.

A proximal end 63 of the first brake member 6 is connected to the resilient spring member 7 and is received in the receiving slot 53, whilst a distal end 64 of the first brake member 6 is mounted on an axial positioning post 54 of the inner wheel 5. Between the proximal end 63 and the distal end 64, the first brake member 6 comprises a substantially arcuate (horseshoe) main body 62 which terminates at the proximal end 63 in an inverted section 61 positioned at the open end 534 of the receiving slot 53. An outer face 621 of the main body 62 contacts the inner wall 532 of the inner wheel 5. When the working wheel assembly is rotating in the working state, the radial stop block 400 engages the open end 534. The radial projecting blocks 40 push corresponding radial projections 51 of the inner wheel 5 and the radial stop block 400 pushes the inverted section 61 of the first brake member 6 thereby causing the resilient spring member 7 to compress in the receiving slot 53 against the end wall 533.

An annular cover plate 8 having a central hole 84 covers the first brake member 6, the inner wheel 5 and the outer wheel 4 and is fastened to the outer wheel 4 via screws (not shown) threadedly engaging screw holes 82, 42.

The second brake member 9 includes an annular body 91 and a substantially cylindrical main body 92 extending axially from the annular body 91. The annular body 91 defines a plurality of screw holes 94 for receiving screws (not show) to fasten the second brake member 9 to a housing 10 of the garden tool. The main body 92 passes through the central hole 84 of the annular cover plate 8 to be positioned within but not in contact with the inner wheel 5 and partially enclosed by but spaced apart from an inner face 622 of the first brake member 6.

When the motor 1 is working, the driver 2 rotates to drive the outer wheel 4 via the transmission strap 3. The inner wheel 5 together with the outer wheel 4 rotates about the working shaft 42 by virtue of the radial projecting blocks 40 of the outer wheel 4 pushing respective radial projections 50 of the inner wheel 5. The resilient spring member 7 is compressed by the radial stop block 400 and the first and second brake members 6, 9 are spaced apart. When the motor stops, the inner wheel 5 is angularly displaced relative to the outer wheel 4. That is, the inner wheel 5 rotates clockwise relative to the outer wheel 4 and because the rotational inertia of the inner wheel 5 is larger than that of the outer wheel 4, the radial projecting blocks 40 and the radial stop block 400 of the outer wheel 4 no longer exert force on the radial projections 51 of the inner wheel 5 and the inverted section 61 of the first brake member 6 respectively. Thus the resilient spring member 7 tends to deform so that the first brake member 6 moves relatively counterclockwise under the force of the resilient spring member 7 to circumferentially rub the second brake member 9 thereby reducing its energy. The rotational energy of the inner wheel 5 (on which is mounted the first brake member 6) is transmitted to the fixed second brake member 9 rapidly so that the inner wheel 5 stops quickly which causes the working shaft 42 to stop quickly.

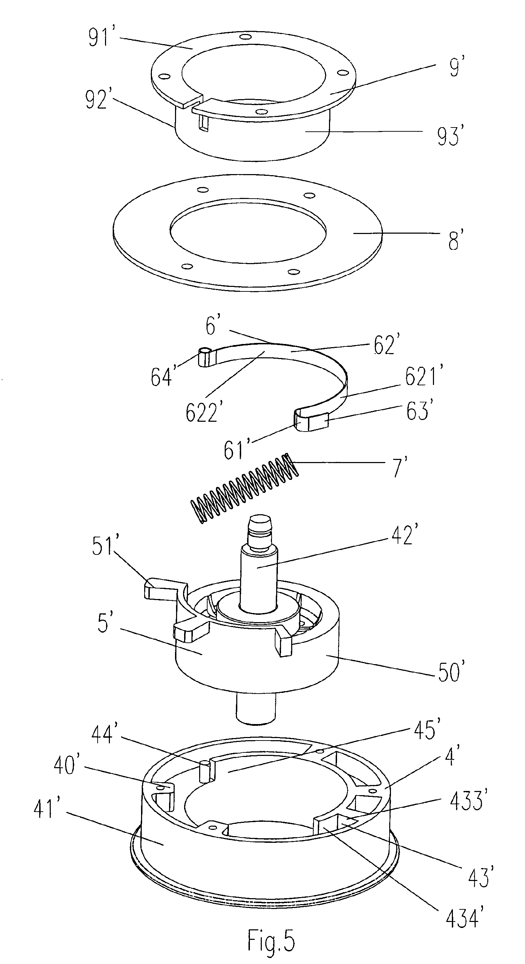

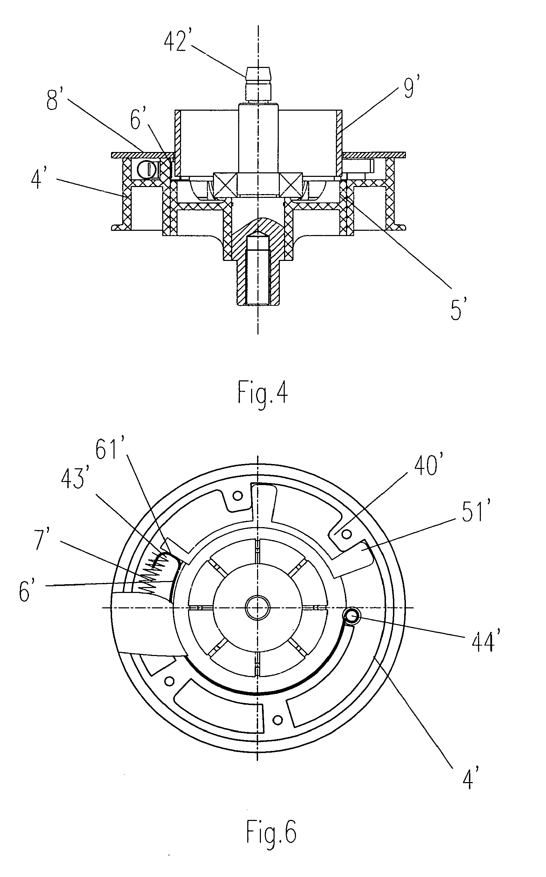

A second embodiment is illustrated in Figures 4 to 6. In this embodiment, the outer wheel 4' includes an outer circumferential wall 41' and an inner wall 45'. An inner face of the outer circumferential wall 41' forms a plurality of circumferentially spaced apart, radial projecting blocks 40' which extend radially inwardly. A plurality of circumferentially spaced apart, radial projections 51' corresponding to the radial projecting blocks 40' extend radially outwardly from an outer face of an outer circumferential wall 50' of the inner wheel 5'. When the inner wheel 5' and the outer wheel 4' are assembled together and the working wheel assembly is in a normal working state, the outer wheel 4' rotates and the radial projecting blocks 40' push the corresponding radial projections 51' of the inner wheel 5' so that the inner wheel 5' is driven to rotate with the working shaft 42'.

The braking mechanism includes a first brake member 6', a second brake member 9' and a resilient spring member 7'. A receiving slot 43' is defined between the outer circumferential wall 41' and the inner wall 45' of the outer wheel 4' for receiving the resilient spring member 7'. The receiving slot 43' is similar in structure to the receiving slot 53 of the first embodiment and includes an end wall 433' vertical to a bottom face of the outer wheel 4' and an open end 434' opposite to the end wall 433'.

When the working wheel assembly is rotating in the working state, one of the radial projections 51' engages the open end 434'. A proximal end 63' of the first brake member 6' is connected to the resilient spring member 7' and received in the receiving slot 43', whilst a distal end 64' of the first brake member 6' is mounted on a positioning post 44' of the outer wheel 4'. Between the proximal end 63' and the distal end 64', the first brake member 6' comprises a substantially arcuate (horseshoe) main body 62' which terminates at the proximal end 63' in an inverted section 61' positioned at the open end 434' of the receiving slot 43'. An outer face 621' of the main body 62' contacts the inner wall 45' of the outer wheel 4'. When the working wheel assembly is rotating in the working state, one of the radial projecting blocks 40' engages the open end 434'. The radial projecting blocks 40' push corresponding radial projections 51' of the inner wheel 5' and the one of the radial projecting blocks 40' pushes the inverted section 61' of the first brake member 6' thereby causing the resilient spring member 7' to compress in the receiving slot 43' against the end wall 433'.

An annular cover plate 8' having a central hole 84 covers the first brake member 6', the inner wheel 5' and the outer wheel 4' and is fastened to the outer wheel 4' via screws (not shown) threadedly engaging screw holes 82', 42'.

The second brake member 9 includes an annular body 91' and a substantially cylindrical main body 92' extending axially from the annular body 91'. The annular body 91' defines a plurality of screw holes 94' for receiving screws (not show) to fasten the second brake member 9' to a housing 10' of the garden tool. The main body 92' passes through the central hole 84' of the annular cover plate 8' to be positioned within but not in contact with the inner wheel 5' and partially enclosed by but spaced apart from an interior face 622' of the first brake member 6'.

As with the first embodiment, when the motor 1 is working, the driver 2 rotates to drive the outer wheel 4' via the transmission strap 3. The inner wheel 5' together with the outer wheel 4' rotates about the working shaft 42' by virtue of the radial projecting blocks 40' of the outer wheel 4' pushing respective radial projections 50' of the inner wheel 5'. The resilient spring member 7' is compressed by the one of the radial projecting blocks 40' and the first and second brake members 6', 9' are spaced apart. When the motor 1 stops, the inner wheel 5' is angularly displaced relative to the outer wheel 4'. That is, the inner wheel 5' rotates clockwise relative to the outer wheel 4' and because the rotational inertia of the inner wheel 5' is larger than that of the outer wheel 4', the radial projecting blocks 40' of the outer wheel 4' no longer exert force on the radial projections 51' of the inner wheel 5' and the inverted section 61' of the first brake member 6' respectively. Thus the resilient spring member 7' tends to deform so that the first brake member 6' moves relatively counterclockwise under the force of the resilient spring member 7' to circumferentially rub the second brake member 9' thereby reducing its energy. The rotational energy of the inner wheel 5' (on which is mounted the first brake member 6') is transmitted to the fixed second brake member 9' rapidly so that the inner wheel 5' stops quickly which causes the working shaft 42' to stop quickly.

## Claims

1. A garden tool comprising:
a housing;
a cutting tool;
a rotary working shaft (42) for mounting the cutting tool; and
a braking mechanism capable of changing the garden tool between a non-working braking state and a working non-braking state, wherein the braking mechanism comprises:
a working wheel assembly including an inner wheel (5) fixed radially to the working shaft and a rotary driven outer wheel (4) enclosing the inner wheel (5) substantially coaxially, wherein in the working non-braking state the outer wheel (4) drives the inner wheel (5) and the rotary working shaft (42) rotationally;
a first brake member (6) connected to the inner wheel (5) at a distal end (64);
a second brake member (9) fastened to the housing, wherein the first brake member (6) is separated from the second brake member (9) in the working non-braking state and the first brake member (6) is in contact with the second brake member (9) during the non-working braking state; and
a resilient spring member (7) seated in the inner wheel (5) and connected to a proximal end (63) of the first brake member (6) in a manner such that the resilient spring member (7) has a tendency to bias the first brake member (6) into contact with the second brake member (9).

2. A garden tool as claimed in claim 1 wherein the outer wheel (4) has a substantially inwardly radial projecting block (40) and the inner wheel (5) has a substantially outwardly radial projection (51), wherein the radial projecting block abuts the radial projection in the working non-braking state.

3. A garden tool as claimed in claim 1 or 2 wherein the outer wheel (4) has a plurality of substantially inwardly radial projecting blocks (40) and the inner wheel (5) has a plurality of substantially outwardly radial projections (51), wherein the plurality of radial projecting blocks and plurality of radial projections are interleaved and at least one of the plurality of radial projecting blocks abuts one of the plurality of radial projections in the working non-braking state.

4. A garden tool as claimed in claim 1, 2 or 3 wherein the outer wheel (4) has a plurality of substantially inwardly radial projecting blocks (40) and the inner wheel (5) has a plurality of substantially outwardly radial projections (51), wherein the plurality of radial projecting blocks and plurality of radial projections are interleaved and each of the plurality of radial projecting blocks abuts an adjacent one of the plurality of radial projections in the working non-braking state.

5. A garden tool as claimed in any preceding claim wherein the inner wheel (5) defines an open-ended receiving slot (53) to receive the resilient spring member (7).

6. A garden tool as claimed in claim 5 wherein the first brake member (6) includes:
a substantially arcuate main body (62) terminating in an inverted portion (61) which is positioned at the open end (534) of the receiving slot (53).

7. A garden tool as claimed in claim 6 wherein one of the plurality of substantially inwardly radial projecting blocks (40) abuts the inverted portion (61) in the working non-braking state so as to compress the resilient spring member (7) against the tendency to bias the first brake member (6) into contact with the second brake member (9).

8. A garden tool as claimed in claim 7 wherein the one of the plurality of substantially inwardly radial projecting blocks (40) releases the inverted portion (61) in the non-working braking state so as to permit the resilient spring member (7) to bias the first brake member (6) into contact with the second brake member (9).

9. A garden tool as claimed in any preceding claim wherein the inner wheel (5) includes a positioning post (54) and a distal end (64) of the first brake member (6) is mounted on the positioning post.

10. A garden tool as claimed in any preceding claim further comprising:
an annular cover plate (8) defining a substantially central hole (84) which covers the first brake member (6), the inner wheel (5) and the outer wheel (4), wherein the second brake member (9) passes through the substantially central hole of the annular cover plate.

11. A garden tool as claimed in any preceding claim wherein the resilient spring member (7) has a tendency to bias the first brake member (6) radially into contact with the second brake member (9).

12. A garden tool as claimed in any preceding claim wherein the inner wheel (5) is substantially concentrically nested within the outer wheel (4).

13. A garden tool as claimed in any preceding claim wherein the second brake member (9) is substantially concentrically seated or nested within the first brake member (6).

14. A garden tool comprising:
a housing;
a cutting tool;
a rotary working shaft (42') for mounting the cutting tool; and
a braking mechanism capable of changing the garden tool between a non-working braking state and a working non-braking state, wherein the braking mechanism comprises:
a working wheel assembly including an inner wheel (5') fixed radially to the working shaft and a rotary driven outer wheel (4') enclosing the inner wheel (5') substantially coaxially, wherein in the working non-braking state the outer wheel (4') drives the inner wheel (5') and the rotary working shaft (42') rotationally;
a first brake member (6') connected to the outer wheel (4') at a distal end (64');
a second brake member (9') fastened to the housing, wherein the first brake member (6') is separated from the second brake member (9') in the working non-braking state and the first brake member (6') is in contact with the second brake member (9') during the non-working braking state; and
a resilient spring member (7') seated in the outer wheel (4') and connected to a proximal end (63') of the first brake member (6') in a manner such that the resilient spring member (7') has a tendency to bias the first brake member (6') into contact with the second brake member (9').

15. A garden tool as claimed in claim 14 wherein the outer wheel (4') has a substantially inwardly radial projecting block (40') and the inner wheel has a substantially outwardly radial projection (51'), wherein the radial projecting block abuts the radial projection in the working non-braking state.

16. A garden tool as claimed in claim 14 or 15 wherein the outer wheel (4') has a plurality of substantially inwardly radial projecting blocks (40') and the inner wheel (5') has a plurality of substantially outwardly radial projections (51'), wherein the plurality of radial projecting blocks and plurality of radial projections are interleaved and at least one of the plurality of radial projecting blocks abuts one of the plurality of radial projections in the working non-braking state.

17. A garden tool as claimed in claim 14, 15 or 16 wherein the outer wheel (4') has a plurality of substantially inwardly radial projecting blocks (40') and the inner wheel (5') has a plurality of substantially outwardly radial projections (51'), wherein the plurality of radial projecting blocks and plurality of radial projections are interleaved and each of the plurality of radial projecting blocks abuts an adjacent one of the plurality of radial projections in the working non-braking state.

18. A garden tool as claimed in any preceding claim wherein the outer wheel (4') defines an open-ended receiving slot (43') to receive the resilient spring member (7').

19. A garden tool as claimed in claim 18 wherein the first brake member (6') includes:
a substantially arcuate main body (62') terminating in an inverted portion (61') which is positioned at the open end (434') of the receiving slot (43').

20. A garden tool as claimed in claim 19 wherein one of the plurality of substantially inwardly radial projecting blocks (40') abuts the inverted portion (61') in the working non-braking state so as to compress the resilient spring member (7') against the tendency to bias the first brake member (6') into contact with the second brake member (9').

21. A garden tool as claimed in any of claims 14 to 20 wherein the outer wheel (4') includes a positioning post (44') and a distal end (64') of the first brake member (6') is mounted on the positioning post.

22. A garden tool as claimed in any of claims 14 to 21 further comprising:
an annular cover plate (8') defining a substantially central hole (84') which covers the first brake member (6'), the inner wheel (5') and the outer wheel (4'), wherein the second brake member (9') passes through the substantially central hole of the annular cover plate.

23. A garden tool as claimed in any of claims 14 to 22 wherein the resilient spring member (7') has a tendency to bias the first brake member (6') radially into contact with the second brake member (9').

24. A garden tool as claimed in any of claims 14 to 23 wherein the inner wheel (5') is substantially concentrically nested within the outer wheel (4').

25. A garden tool as claimed in any of claims 14 to 24 wherein the second brake member (9') is substantially concentrically seated or nested within the first brake member (6').

## Patentansprüche

1. Gartenwerkzeug, das umfasst:
ein Gehäuse;
ein Schneidwerkzeug;
eine Dreharbeitswelle (42) zum Befestigen des Schneidwerkzeugs; und
einen Bremsmechanismus, der das Gartenwerkzeug zwischen einem nicht-arbeitenden Bremszustand und einem arbeitenden Nicht-Bremszustand wechseln kann, wobei der Bremsmechanismus umfasst:
eine Arbeitsradanordnung mit einem inneren Rad (5), das radial an der Arbeitswelle befestigt ist, und mit einem drehbar angetriebenen, äußeren Rad (4), das das innere Rad (5) im Wesentlichen koaxial umgibt, wobei in dem arbeitenden Nicht-Bremszustand das äußere Rad (4) das innere Rad (5) und die Dreharbeitswelle (42) drehend antreibt;
ein erstes Bremselement (6), das mit dem inneren Rad (5) an einem distalen Ende (64) verbunden ist;
ein zweites Bremselement (9), das an dem Gehäuse befestigt ist, wobei das erste Bremselement (6) in dem arbeitenden Nicht-Bremszustand von dem zweiten Bremselement (9) getrennt ist und das erste Bremselement (6) während des nicht-arbeitenden Bremszustands mit dem zweiten Bremselement (9) im Kontakt ist; und
ein elastisches Federelement (7), das in dem inneren Rad (5) sitzt und mit einem proximalen Ende (63) des ersten Bremselements (6) in einer Weise derart verbunden ist, dass das elastische Federelement (7) eine Tendenz aufweist, das erste Bremselement (6) in einen Kontakt mit dem zweiten Bremselement (9) vorzuspannen.

2. Gartenwerkzeug nach Anspruch 1, wobei das äußere Rad (4) einen im Wesentlichen radial einwärts überstehenden Block (40) aufweist und das innere Rad (5) einen im Wesentlichen radial nach außen gerichteten Überstand (51) aufweist, wobei der radial überstehende Block an den radialen Überstand in dem arbeitenden Nicht-Bremszustand anliegt.

3. Gartenwerkzeug nach Anspruch 1 oder 2, wobei das äußere Rad (4) mehrere im Wesentlichen radial einwärts überstehende Blöcke (40) aufweist und das innere Rad (5) mehrere im Wesentlichen radial nach außen gerichtete Überstände (51) aufweist, wobei die mehreren radial überstehenden Blöcke und die mehreren radialen Überstände verschachtelt sind und wobei mindestens einer der mehreren radial überstehenden Blöcke an einen der mehreren radialen Überstände in dem arbeitenden Nicht-Bremszustand anliegt.

4. Gartenwerkzeug nach Anspruch 1, 2 oder 3, wobei das äußere Rad (4) mehrere im Wesentlichen radial einwärts überstehende Blöcke (40) aufweist und das innere Rad (5) mehrere im Wesentlichen radial nach außen gerichtete Überstände (51) aufweist, wobei die mehreren radial überstehenden Blöcke und die mehreren radialen Überstände verschachtelt sind und wobei jeder der mehreren radial überstehenden Blöcke an einen benachbarten der mehreren radialen Überstände in dem arbeitenden Nicht-Bremszustand anliegt.

5. Gartenwerkzeug nach einem vorhergehenden Anspruch, wobei das innere Rad (5) einen Aufnahmeschlitz (53) mit einem offenen Ende definiert, um das elastische Federelement (7) aufzunehmen.

6. Gartenwerkzeug nach Anspruch 5, wobei das erste Bremselement (6) enthält:
einen im Wesentlichen bogenförmigen Hauptkörper (62), der in einem umgekehrten Abschnitt (61) endet, der an dem offenen Ende (534) des Aufnahmeschlitzes (53) positioniert ist.

7. Gartenwerkzeug nach Anspruch 6, wobei einer der mehreren im Wesentlichen radial einwärts überstehenden Blöcke (40) an den umgekehrten Abschnitt (61) in dem arbeitenden Nicht-Bremszustand anliegt, um das elastische Federelement (7) gegen die Tendenz, das erste Bremselement (6) in einen Kontakt mit dem zweiten Bremselement (9) vorzuspannen, zusammenzudrücken.

8. Gartenwerkzeug nach Anspruch 7, wobei einer der mehreren im Wesentlichen radial einwärts überstehenden Blöcke (40) den umgekehrten Abschnitt (61) in dem nicht-arbeitenden Bremszustand auslöst, um dem elastischen Federelement (7) zu ermöglichen, das erste Bremselement (6) in einen Kontakt mit dem zweiten Bremselement (9) vorzuspannen.

9. Gartenwerkzeug nach einem vorhergehenden Anspruch, wobei das innere Rad (5) einen Positionierungszapfen (54) enthält und wobei ein distales Ende (64) des ersten Bremselements (6) an dem Positionierungszapfen befestigt ist.

10. Gartenwerkzeug nach einem vorhergehenden Anspruch, das ferner umfasst:
eine ringförmige Deckplatte (8), die ein im Wesentlichen zentrales Loch (84) definiert, das das erste Bremselement (6), das innere Rad (5) und das äußere Rad (4) abdeckt, wobei das zweite Bremselement (9) durch das im Wesentlichen zentrale Loch der ringförmigen Deckplatte hindurchtritt.

11. Gartenwerkzeug nach einem vorhergehenden Anspruch, wobei das elastische Federelement (7) eine Tendenz aufweist, das erste Bremselement (6) radial in einen Kontakt mit dem zweiten Bremselement (9) vorzuspannen.

12. Gartenwerkzeug nach einem vorhergehenden Anspruch, wobei das innere Rad (5) im Wesentlichen konzentrisch innerhalb des äußeren Rads (4) angeordnet ist.

13. Gartenwerkzeug nach einem vorhergehenden Anspruch, wobei das zweite Bremselement (9) im Wesentlichen konzentrisch innerhalb des ersten Bremselements (6) sitzt oder angeordnet ist.

14. Gartenwerkzeug, das umfasst:
ein Gehäuse;
ein Schneidwerkzeug;
eine Dreharbeitswelle (42') zum Befestigen des Schneidwerkzeugs; und
einen Bremsmechanismus, der das Gartenwerkzeug zwischen einem nicht-arbeitenden Bremszustand und einem arbeitenden Nicht-Bremszustand wechseln kann, wobei der Bremsmechanismus umfasst:
eine Arbeitsradanordnung mit einem inneren Rad (5'), das radial an der Arbeitswelle befestigt ist, und mit einem drehbar angetriebenen, äußeren Rad (4'), das das innere Rad (5') im Wesentlichen koaxial umgibt, wobei in dem arbeitenden Nicht-Bremszustand das äußere Rad (4') das innere Rad (5') und die Dreharbeitswelle (42') drehend antreibt;
ein erstes Bremselement (6'), das mit dem äußeren Rad (4') an einem distalen Ende (64') verbunden ist;
ein zweites Bremselement (9'), das an dem Gehäuse befestigt ist, wobei das erste Bremselement (6') in dem arbeitenden Nicht-Bremszustand von dem zweiten Bremselement (9') getrennt ist und das erste Bremselement (6') während des nicht-arbeitenden Bremszustands mit dem zweiten Bremselement (9') im Kontakt ist; und
ein elastisches Federelement (7'), das in dem äußeren Rad (4') sitzt und mit einem proximalen Ende (63') des ersten Bremselements (6') in einer Weise derart verbunden ist, dass das elastische Federelement (7') eine Tendenz aufweist, das erste Bremselement (6') in einen Kontakt mit dem zweiten Bremselement (9') vorzuspannen.

15. Gartenwerkzeug nach Anspruch 14, wobei das äußere Rad (4') einen im Wesentlichen radial einwärts überstehenden Block (40') aufweist und das innere Rad einen im Wesentlichen radial nach außen gerichteten Überstand (51') aufweist, wobei der radial überstehende Block an den radialen Überstand in dem arbeitenden Nicht-Bremszustand anliegt.

16. Gartenwerkzeug nach Anspruch 14 oder 15, wobei das äußere Rad (4') mehrere im Wesentlichen radial einwärts überstehende Blöcke (40') aufweist und das innere Rad (5') mehrere im Wesentlichen radial nach außen gerichtete Überstände (51') aufweist, wobei die mehreren radial überstehenden Blöcke und die mehreren radialen Überstände verschachtelt sind und wobei mindestens einer der mehreren radial überstehenden Blöcke an einen der mehreren radialen Überstände in dem arbeitenden Nicht-Bremszustand anliegt.

17. Gartenwerkzeug nach Anspruch 14, 15 oder 16, wobei das äußere Rad (4') mehrere im Wesentlichen radial einwärts überstehende Blöcke (40') aufweist und das innere Rad (5') mehrere im Wesentlichen radial nach außen gerichtete Überstände (51') aufweist, wobei die mehreren radial überstehenden Blöcke und die mehreren radialen Überstände verschachtelt sind und wobei jeder der mehreren radial überstehenden Blöcke an einen benachbarten der mehreren radialen Überstände in dem arbeitenden Nicht-Bremszustand anliegt.

18. Gartenwerkzeug nach einem vorhergehenden Anspruch, wobei das äußere Rad (4') einen Aufnahmeschlitz (43') mit einem offenen Ende definiert, um das elastische Federelement (7') aufzunehmen.

19. Gartenwerkzeug nach Anspruch 18, wobei das erste Bremselement (6') enthält:
einen im Wesentlichen bogenförmigen Hauptkörper (62'), der in einem umgekehrten Abschnitt (61') endet, der an dem offenen Ende (434') des Aufnahmeschlitzes (43') positioniert ist.

20. Gartenwerkzeug nach Anspruch 19, wobei einer der mehreren im Wesentlichen radial einwärts überstehenden Blöcke (40') an den umgekehrten Abschnitt (61') in dem arbeitenden Nicht-Bremszustand anliegt, um das elastische Federelement (7') gegen die Tendenz, das erste Bremselement (6') in einen Kontakt mit dem zweiten Bremselement (9') vorzuspannen, zusammenzudrücken.

21. Gartenwerkzeug nach einem der Ansprüche 14 bis 20, wobei das äußere Rad (4') einen Positionierungszapfen (44') enthält und wobei ein distales Ende (64') des ersten Bremselements (6') an dem Positionierungszapfen befestigt ist.

22. Gartenwerkzeug nach einem der Ansprüche 14 bis 21, das ferner umfasst:
eine ringförmige Deckplatte (8'), die ein im Wesentlichen zentrales Loch (84') definiert, das das erste Bremselement (6'), das innere Rad (5') und das äußere Rad (4') abdeckt, wobei das zweite Bremselement (9') durch das im Wesentlichen zentrale Loch der ringförmigen Deckplatte hindurchtritt.

23. Gartenwerkzeug nach einem der Ansprüche 14 bis 22, wobei das elastische Federelement (7') eine Tendenz aufweist, das erste Bremselement (6') radial in einen Kontakt mit dem zweiten Bremselement (9') vorzuspannen.

24. Gartenwerkzeug nach einem der Ansprüche 14 bis 23, wobei das innere Rad (5') im Wesentlichen konzentrisch innerhalb des äußeren Rads (4') angeordnet ist.

25. Gartenwerkzeug nach einem der Ansprüche 14 bis 24, wobei das zweite Bremselement (9') im Wesentlichen konzentrisch innerhalb des ersten Bremselements (6') sitzt oder angeordnet ist.

## Revendications

1. Outil de jardin comprenant :
un boîtier ;
un outil de coupe ;
un arbre de travail rotatif (42) pour monter l'outil de coupe ; et
un mécanisme de freinage apte à faire passer l'outil de jardin entre une condition de freinage inopérante et une condition de non-freinage opérante, le mécanisme de freinage comprenant :
un ensemble roue de travail comprenant une roue interne (5) fixée radialement à l'arbre de travail et une roue externe rotative entraînée (4) enfermant la roue interne (5) sensiblement coaxialement, où dans la condition de non-freinage opérante la roue externe (4) entraîne en rotation la roue interne (5) et l'arbre de travail rotatif (42) ;
un premier organe frein (6) raccordé à la roue interne (5) à une extrémité distale (64) ;
un second organe frein (9) fixé au boîtier, le premier organe frein (6) étant séparé du second organe frein (9) dans la condition de non-freinage opérante et le premier organe frein (6) étant en contact avec le second organe frein (9) durant la condition de freinage inopérante ; et
un organe ressort élastique (7) siégeant dans la roue interne (5) et raccordé à une extrémité proximale (63) du premier organe frein (6) de manière que l'organe ressort élastique (7) ait tendance à solliciter le premier organe frein (6) en contact avec le second organe frein (9).

2. Outil de jardin selon la revendication 1, dans lequel la roue externe (4) comporte un bloc en saillie radiale sensiblement vers l'intérieur (40) et la roue interne (5) comporte une saillie radiale sensiblement vers l'extérieur (51), le bloc en saillie radiale butant contre la saillie radiale dans la condition de non-freinage opérante.

3. Outil de jardin selon la revendication 1 ou 2, dans lequel la roue externe (4) comporte une pluralité de blocs en saillie radiale sensiblement vers l'intérieur (40) et la roue interne (5) comporte une pluralité de saillies radiales sensiblement vers l'extérieur (51), la pluralité de blocs en saillie radiale et la pluralité de saillies radiales étant intercalés et au moins un bloc de la pluralité de blocs en saillie radiale butant contre une saillie de la pluralité de saillies radiales dans la condition de non-freinage opérante.

4. Outil de jardin selon la revendication 1, 2 ou 3, dans lequel la roue externe (4) comporte une pluralité de blocs en saillie radiale sensiblement vers l'intérieur (40) et la roue interne (5) comporte une pluralité de saillies radiales sensiblement vers l'extérieur (51), la pluralité de blocs en saillie radiale et la pluralité de saillies radiales étant intercalés et chaque bloc de la pluralité de blocs en saillie radiale butant contre une saillie adjacente de la pluralité de saillies radiales dans la condition de non-freinage opérante.

5. Outil de jardin selon l'une quelconque des revendications précédentes, dans lequel la roue interne (5) délimite une fente de réception à extrémité ouverte (53) destinée à recevoir l'organe ressort élastique (7).

6. Outil de jardin selon la revendication 5, dans lequel le premier organe frein (6) comprend :
un corps principal sensiblement arqué (62) se terminant en une partie inversée (61) qui est située à l'extrémité ouverte (534) de la fente de réception (53).

7. Outil de jardin selon la revendication 6, dans lequel un bloc de la pluralité de blocs en saillie radiale sensiblement vers l'intérieur (40) bute contre la partie inversée (61) dans la condition de non-freinage opérante afin de comprimer l'organe ressort élastique (7) contre sa tendance à solliciter le premier organe frein (6) en contact avec le second organe frein (9).

8. Outil de jardin selon la revendication 7, dans lequel ledit bloc de la pluralité de blocs en saillie radiale sensiblement vers l'intérieur (40) libère la partie inversée (61) dans la condition de freinage inopérante afin de permettre à l'organe ressort élastique (7) de solliciter le premier organe frein (6) en contact avec le second organe frein (9).

9. Outil de jardin selon l'une quelconque des revendications précédentes, dans lequel la roue interne (5) comprend un montant de positionnement (54) et une extrémité distale (64) du premier organe frein (6) est montée sur le montant de positionnement.

10. Outil de jardin selon l'une quelconque des revendications précédentes, comprenant, en outre :
une plaque de couverture annulaire (8) délimitant un trou sensiblement central (84) qui recouvre le premier organe frein (6), la roue interne (5) et la roue externe (4), le second organe frein (9) passant par le trou sensiblement central de la plaque de couverture annulaire.

11. Outil de jardin selon l'une quelconque des revendications précédentes, dans lequel l'organe ressort élastique (7) a tendance à solliciter le premier organe frein (6) radialement en contact avec le second organe frein (9).

12. Outil de jardin selon l'une quelconque des revendications précédentes, dans lequel la roue interne (5) est nichée sensiblement concentriquement au sein de la roue externe (4).

13. Outil de jardin selon l'une quelconque des revendications précédentes, dans lequel le second organe frein (9) est emboîté ou niché sensiblement concentriquement au sein du premier organe frein (6).

14. Outil de jardin comprenant :
un boîtier ;
un outil de coupe ;
un arbre de travail rotatif (42') pour monter l'outil de coupe ; et
un mécanisme de freinage apte à faire passer l'outil de jardin entre une condition de freinage inopérante et une condition de non-freinage opérante, le mécanisme de freinage comprenant :
un ensemble roue de travail comprenant une roue interne (5') fixée radialement à l'arbre de travail et une roue externe rotative entraînée (4') enfermant la roue interne (5') sensiblement coaxialement, où dans la condition de non-freinage opérante la roue externe (4') entraîne en rotation la roue interne (5') et l'arbre de travail rotatif (42') ;
un premier organe frein (6') raccordé à la roue externe (4') à une extrémité distale (64') ;
un second organe frein (9') fixé au boîtier, le premier organe frein (6') étant séparé du second organe frein (9') dans la condition de non-freinage opérante et le premier organe frein (6') est en contact avec le second organe frein (9') durant la condition de freinage inopérante ; et
un organe ressort élastique (7') siégeant dans la roue externe (4') et raccordé à une extrémité proximale (63') du premier organe frein (6') de manière que l'organe ressort élastique (7') ait tendance à solliciter le premier organe frein (6') en contact avec le second organe frein (9').

15. Outil de jardin selon la revendication 14, dans lequel la roue externe (4') comporte un bloc en saillie radiale sensiblement vers l'intérieur (40') et la roue interne comporte une saillie radiale sensiblement vers l'extérieur (51'), le bloc en saillie radiale butant contre la saillie radiale dans la condition de non-freinage opérante.

16. Outil de jardin selon la revendication 14 ou 15, dans lequel la roue externe (4') comporte une pluralité de blocs en saillie radiale sensiblement vers l'intérieur (40') et la roue interne (5') comporte une pluralité de saillies radiales sensiblement vers l'extérieur (51'), la pluralité de blocs en saillie radiale et la pluralité de saillies radiales étant intercalés et au moins un bloc de la pluralité de blocs en saillie radiale butant contre une saillie de la pluralité de saillies radiales dans la condition de non-freinage opérante.

17. Outil de jardin selon la revendication 14, 15 ou 16, dans lequel la roue externe (4') comporte une pluralité de blocs en saillie radiale sensiblement vers l'intérieur (40') et la roue interne (5') comporte une pluralité de saillies radiales sensiblement vers l'extérieur (51'), la pluralité de blocs en saillie radiale et la pluralité de saillies radiales étant intercalés et chaque bloc de la pluralité de blocs en saillie radiale butant contre une saillie adjacente de la pluralité de saillies radiales dans la condition de non-freinage opérante.

18. Outil de jardin selon l'une quelconque des revendications précédentes, dans lequel la roue externe (4') délimite une fente de réception à extrémité ouverte (43') destinée à recevoir l'organe ressort élastique (7').

19. Outil de jardin selon la revendication 18, dans lequel le premier organe frein (6') comprend :
un corps principal sensiblement arqué (62') se terminant en une partie inversée (61') qui est située à l'extrémité ouverte (434') de la fente de réception (43').

20. Outil de jardin selon la revendication 19, dans lequel un bloc de la pluralité de blocs en saillie radiale sensiblement vers l'intérieur (40') bute contre la partie inversée (61') dans la condition de non-freinage opérante afin de comprimer l'organe ressort élastique (7') contre sa tendance à solliciter le premier organe frein (6') en contact avec le second organe frein (9').

21. Outil de jardin selon l'une quelconque des revendications 14 à 20, dans lequel la roue externe (4') comprend un montant de positionnement (44') et une extrémité distale (64') du premier organe frein (6') est montée sur le montant de positionnement.

22. Outil de jardin selon l'une quelconque des revendications 14 à 21, comprenant, en outre :
une plaque de couverture annulaire (8') délimitant un trou sensiblement central (84') qui recouvre le premier organe frein (6'), la roue interne (5') et la roue externe (4'), le second organe frein (9') passant par le trou sensiblement central de la plaque de couverture annulaire.

23. Outil de jardin selon l'une quelconque des revendications 14 à 22, dans lequel l'organe ressort élastique (7') a tendance à solliciter le premier organe frein (6') radialement en contact avec le second organe frein (9').

24. Outil de jardin selon l'une quelconque des revendications 14 à 23, dans lequel la roue interne (5') est sensiblement nichée concentriquement au sein de la roue externe (4').

25. Outil de jardin selon l'une quelconque des revendications 14 à 24, dans lequel le second organe frein (9') est emboîté ou niché sensiblement concentriquement au sein du premier organe frein (6').
